# EUROPÄISCHE PATENTANMELDUNG

(11) **EP 4 095 939 A1**
(43) Veröffentlichungstag der Anmeldung: **30.11.2022**
(21) Anmeldenummer: 21176662.1
(22) Anmeldetag: 28.05.2021
(51) Int. Cl.: H01M 4/04, H01M 4/139, H01M 10/0525

(54) **VERFAHREN ZUM HERSTELLEN EINER BATTERIEZELLE**

(71) Anmelder: Siemens Aktiengesellschaft, 80333 München (DE)
(72) Erfinder: Schulte, Sascha, 91315 Höchstadt (DE)

(57) **Zusammenfassung**

Die Erfindung betrifft ein Verfahren zum Herstellen einer Batteriezelle aufweisend mindestens eine Schicht, wobei die Schicht eine Beschichtung aufweist.

Das Verfahren umfasst die Schritte:
- Ermitteln (S1) eines ersten Messwertes durch ein Messverfahren vor Durchführen eines Prozessschritts des Herstellens der Batteriezelle, wobei der Prozessschritt ein Bearbeiten oder ein Herstellen der mindestens einen Schicht umfasst,
- Ermitteln (S2) eines zweiten Messwertes durch das Messverfahren nach Durchführen des Prozessschritts,
- Bestimmen (S3) von mindestens einem Wert unter Hinzunahme eines Vergleichs des ersten Messwertes und des zweiten Messwertes, wobei der mindestens eine Wert eine andere physikalische Größe bemisst, als der erste Messwert und als der zweite Messwert und
- Herstellen (S4) der Batteriezelle unter Einbezug des mindestens einen Wertes.

## Beschreibung

### Gebiet der Erfindung

Die vorliegende Erfindung betrifft ein Verfahren zum Herstellen einer Batteriezelle aufweisend mindestens eine Schicht, wobei die Schicht eine Beschichtung aufweist. Die Erfindung betrifft außerdem ein zugehöriges Computerprogrammprodukt unn computerlesbares Medium

### Beschreibung des Stands der Technik

Batteriezellen, insbesondere Lithium-Ionen-Zellen bestehen aus einer Vielzahl aufeinander geschichteter, insbesondere gewickelter oder gestapelter, Schichten bestehend aus Anoden, Kathoden, Separatoren und ggf. weiteren Elementen.

Die Elektroden bestehen üblicherweise aus Metallfolien, insbesondere Kupfer- oder Aluminiumfolien, mit einer Beschichtung aus dem so genannten Aktivmaterial, insbesondere einer lithiumhaltigen Paste, auch "Slurry" genannt.

Die Metallfolien und deren Beschichtungen sind meist nur einige Mikrometer dick und daher sehr empfindlich gegenüber Störungen im Beschichtungsprozess. Abweichungen von Parametern bei der Beschichtung, insbesondere der Dicke, und/oder der Materialverteilung der Beschichtung, haben negative Auswirkungen auf die Qualität und/oder Sicherheit der letztendlich zu produzierenden Batteriezelle.

Ein besonders gewichtiger negativer Einflussfaktor sind die mechanischen Inhomogenitäten, also Schwankungen der Dicke oder ungewollte Porositäten und/oder Erhebungen. Diese mechanischen Inhomogenitäten oder Abweichungen können in makroskopische und mikroskopische Fehler eingeteilt werden. Beide haben jeweils unterschiedliche Auswirkungen auf die finale Produktqualität der Batteriezelle und wirken auf unterschiedliche Zielparameter, insbesondere die Lebensdauer und/oder den Zellwiderstand der Batteriezelle, hängen aber in der Ursache manchmal teilweise zusammen.

Makroskopische Effekte sind insbesondere Schwankungen der Beschichtungsdicke, die über eine Distanz von mehreren Centimetern oder sogar Metern sichtbar werden. Ebenso sind lokale "Löcher" oder Anhäufungen durch zu wenig oder zu viel aufgebrachtes Material eher im makroskopischen Bereich. Derartige Fehler führen oft zu Sofortausfällen oder Kurzschlüssen der Batteriezelle.

Mikroskopische Effekte, wie Mikrorisse, abweichende Porositäten, kleine Fremdpartikel oder ähnliches, wirken meist eher langfristig und bewirken insbesondere eine beschleunigte Alterung oder reduzierte Kapazität der Batteriezelle.

Zur Vermeidung von Beschichtungsfehlern wird in der Industrie primär eine sehr enge Parametrierung und Überwachung aller relevanten Produktionsparameter wie insbesondere die Folienvorlaufgeschwindigkeit oder die Viskosität des Slurry durchgeführt. Das korrekte Einstellen der jeweiligen Maschinen ist somit sehr aufwändig und muss in regelmäßigen Abständen oder sogar kontinuierlich kontrolliert werden.

Einige Hersteller bieten Analysesysteme, die mit akustischen, optischen oder anderen elektromagnetischen Sensoren, manchmal auch beta-Strahlung, die Beschichtung analysieren und auf Defekte prüfen. Diese Systeme sind jedoch immer auf die charakteristischen Detektionsmöglichkeiten der jeweiligen Methode beschränkt und können daher nur einzelne Fehlertypen detektieren. Bei Scannersystemen, durch welche ein Sensor die Oberfläche der Beschichtung insbesondere zeilenweise abtastet, kommt erschwerend hinzu, dass die Abtastung unter Umständen unvollständig ist und in jedem Fall einen hohen Aufwand darstellt.

Andere Analyseverfahren basieren auf einer offline-Analyse, bei der einzelne Stichproben aus der Produktionslinie entfernt und z.B. mit metallografischen Schliffen im Labor analysiert werden. Diese Analysen bieten eine wesentlich höhere Analysetiefe, können aber aufgrund des zerstörenden Charakters nur an einzelnen Stichproben durchgeführt werden.

Ein gemeinsames Merkmal dieser Verfahren ist die Tatsache, dass sie eine Bewertung des gemessenen "Ist-Stand" durchführen. Es wird also bewertet, ob beispielsweise die Oberflächenrauhigkeit "zu schlecht", das heißt "zu hoch" ist.

Die Aufgabe der Erfindung besteht darin, eine Lösung für eine verbesserte Herstellung von Batteriezellen unter Einbezug einer Analyse der Beschichtungsqualität bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Verfahren zum Herstellen einer Batteriezelle aufweisend mindestens eine Schicht, wobei die Schicht eine Beschichtung aufweist.

Das Verfahren beinhaltet die Schritte:
- Ermitteln eines ersten Messwertes durch ein Messverfahren vor Durchführen eines Prozessschritts des Herstellens der Batteriezelle, wobei der Prozessschritt ein Bearbeiten oder ein Herstellen der mindestens einen Schicht umfasst,
- Ermitteln eines zweiten Messwertes durch das Messverfahren nach Durchführen des Prozessschritts,
- Bestimmen von mindestens einem Wert unter Hinzunahme eines Vergleichs des ersten Messwertes und des zweiten Messwertes, wobei der mindestens eine Wert eine andere physikalische Größe bemisst, als der erste Messwert und als der zweite Messwert und
- Herstellen der Batteriezelle unter Einbezug des mindestens einen Wertes.

Ein Aspekt der Erfindung besteht darin, den mindestens einen Wert nicht direkt zu messen, da dieser unter Umständen gar nicht direkt in der Herstellumgebung gemessen werden kann, sondern den mindestens einen Wert aus dem ersten Messwert und dem zweiten Messwert zu bestimmen.

Wobei der mindestens eine Wert eine andere physikalische Größe "bemisst", bedeutet, dass der mindestens eine Wert eine andere physikalische Größe "angibt". Der erste Messwert und der zweite Messwert können somit eine Oberflächenrauigkeit angeben und der mindestens eine Wert bemisst eine Lebensdauer der Batteriezelle oder einen Parameter einer Maschine der Herstellung der Batteriezelle.

Neu ist somit die differenzielle Analyse der beschichteten Rohlinge der Batteriezellen. Dabei wird, insbesondere mit einem Wirbelstromsensor, vor und nach einem mechanisch sehr anspruchsvollen Prozessschritt ein Messwert, insbesondere die Beschichtungsqualität, ermittelt. Ein Vergleich der Werte, das heißt des ersten Messwertes und des zweiten Messwertes, vor und nach dem Prozessschritt erlaubt es, Rückschlüsse auf weitere, eigentlich nur im Labor ermittelbare Materialeigenschaften abzuleiten.

Somit kann, anders als nach Verfahren des Stands der Technik erkannt werden, ob eine Veränderung der ermittelten Parameter, das heißt des ersten Messwertes und des zweiten Messwertes, durch die Prozessschritte auftritt und diese Veränderung wird als Qualitätsmerkmal in Form des mindestens einen Wertes verwendet. Der Vergleich des ersten Messwertes und des zweiten Messwertes, insbesondere Veränderungen oder Änderungen im Material oder dem Aufbau der Schichten, sind somit der Kern der Analyse und Bewertung. Aus dem Vergleich des ersten Messwertes und des zweiten Messwertes wird außerdem der mindestens eine Wert bestimmt.

Es sind also nicht die Messergebnisse des ersten Messwertes und des zweiten Messwertes von vorrangiger Bedeutung, sondern der Weg dorthin, das heißt der Prozessschritt, welcher den zweiten Messwert verursacht hat und der Zustand, also der erste Messwert vor dem Prozessschritt.

Insbesondere werden die Messwerte somit für eine weitere mathematische Analyse verwendet. Insbesondere kann so festgestellt werden, dass ein versteckter Fehler, insbesondere ein zu weiches oder nasses Material, vorliegt, wo eine einfache Sensormessung keine Fehler bzw. nur akzeptable Kleinabweichungen festgestellt hätte. Die Messung der versteckten Werte bzw. die Ableitung dieser kann auch als Messung durch "virtuelle Sensoren" bezeichnet werden.

In einer Weiterbildung der Erfindung ist die Batteriezelle als Lithium-Ionen-Zelle ausgebildet.

In einer weiteren Weiterbildung der Erfindung ist die mindestens eine Schicht als Elektrode, insbesondere als Anode oder Kathode ausgebildet.

In einer weiteren Weiterbildung der Erfindung ist die mindestens eine Schicht als Separator ausgebildet.

In einer weiteren Weiterbildung der Erfindung ist die mindestens eine Schicht als Metallfolie, insbesondere Kupferfolie oder Aluminiumfolie ausgebildet.

In einer weiteren Weiterbildung der Erfindung ist die Beschichtung als Aktivmaterial ausgebildet.

In einer weiteren Weiterbildung der Erfindung ist die Beschichtung aus einer lithiumhaltigen Paste ausgebildet.

In einer weiteren Weiterbildung der Erfindung ist der erste Messwert und/oder der zweite Messwert als:
- Dicke der Beschichtung,
- Dicke der Schicht,
- Rissdichte in der Beschichtung,
- Rissgröße in der Beschichtung,
- Fremdpartikeldichte der Beschichtung,
- Fremdpartikelanteil der Beschichtung,
- Homogenität der Beschichtung,
- Oberflächenrauigkeit der Beschichtung,
- Porosität der Beschichtung,
- mechanische Festigkeit der Beschichtung,
- Härte der Beschichtung,
- Haftung der Beschichtung,
- Viskosität der Beschichtung,
- Vorlaufgeschwindigkeit bei einem Beschichtungsprozess,
- Folienvorlaufgeschwindigkeit bei einem Beschichtungsprozess,
- Wasseranteil der Beschichtung,
- Materialzusammensetzung der Beschichtung und/oder
- Materialverteilung der Beschichtung
   ausgebildet.

Dies hat den Vorteil, dass der erste Messwert und/oder der zweite Messwert direkt und im Rahmen der Herstellung der Batteriezelle bemessen werden kann. Der erste Messwert und/oder der zweite Messwert können herangezogen werden, um den mindestens einen Wert zu bestimmen. Der mindestens eine Wert kann wiederum herangezogen werden um das Herstellen der Batteriezelle zu beeinflussen.

In einer weiteren Weiterbildung der Erfindung ist der mindestens eine Wert als:
- Lebensdauer,
- Kapazität,
- Qualitätsparameter und/oder
- Zellwiderstand
   der Batteriezelle ausgebildet.

Dies hat den Vorteil, dass der mindestens eine Wert herangezogen werden kann, um eine Aussage über die Qualität der Batteriezelle zu treffen. Der mindestens eine Wert wird nicht direkt gemessen, sondern aus dem ersten Messwert und dem zweiten Messwert abgeleitet oder bestimmt. Der mindestens eine Wert bemisst eine andere physikalische Größe als der erste Messwert und der zweite Messwert.

In einer weiteren Weiterbildung der Erfindung ist der mindestens eine Wert als:
- Maschinenparameter,
- Herstellungsparameter und/oder
- Steuerparameter
   des Herstellens der Batteriezelle ausgebildet.

Dies hat den Vorteil, dass der mindestens eine Wert für eine Verbesserung der Prozessschritte oder eine Fehlerbehebung im Herstellungsprozess herangezogen werden kann. Der mindestens eine Wert wird nicht direkt gemessen, sondern aus dem ersten Messwert und dem zweiten Messwert abgeleitet oder bestimmt. Der mindestens eine Wert bemisst eine andere physikalische Größe als der erste Messwert und der zweite Messwert.

In einer weiteren Weiterbildung der Erfindung umfasst das Herstellen der Batteriezelle unter Einbezug des mindestens einen Wertes:
- ein Anpassen von Herstellungsparametern,
- ein Bestimmen eines Qualitätsparameters,
- ein Bestimmen einer Stellgröße,
- ein Steuern von Maschinenparametern und/oder
- ein Speichern des mindestens einen Wertes.

Dies hat den Vorteil, dass der mindestens eine Wert für eine Verbesserung der Prozessschritte oder eine Fehlerbehebung beim Herstellen der Batteriezelle herangezogen werden kann.

In einer weiteren Weiterbildung der Erfindung umfasst das Bestimmen des mindestens einen Wertes außerdem:
- eine Hinzunahme eines Modells,
- eine Analyse mittels mathematischer Methoden und/oder
- eine Simulation.

Dies hat den Vorteil, dass Modelle oder Simulation des Herstellens der Batteriezelle herangezogen werden können.

In einer weiteren Weiterbildung der Erfindung ist der Prozessschritt ein Schritt:
- eines Biegeprozesses,
- eines Walzprozesses,
- eines Kalandrierprozesses und/oder
- eines Beschichtungsprozesses.

Dies hat den Vorteil, dass mittels des erfindungsgemäßen Verfahrens verschiedenen Prozessschritte analysiert werden können.

In einer weiteren Weiterbildung der Erfindung ist das Messverfahren als:
- akustisches Messverfahren,
- strahlungsbasiertes Messverfahren,
- optisches Messverfahren und/oder
- elektromagnetisches Messverfahren
   ausgebildet.

In einer weiteren Weiterbildung der Erfindung ist das Messverfahren als:
- Ultraschallverfahren,
- Röntgenverfahren oder
- Wirbelstromverfahren
   ausgebildet.

Dies hat den Vorteil, dass für das erfindungsgemäßen Verfahren verschiedenen Messverfahren verwendet werden können. Kommerziell verfügbare Sensoren, die eine qualitative und in begrenztem Umfang auch quantitative Analyse verschiedener Fehler auch unterhalb der Oberfläche der Beschichtung ermöglichen sind bekannt. Dazu zählen insbesondere Ultraschallsensoren, Röntgensysteme und Wirbelstromsensoren. Diese können jeweils unterschiedliche technische Eigenschaften der Beschichtung erfassen und daraus ableiten, ob es insbesondere Risse im Material gibt, die Beschichtung von der Trägerfolie abgelöst ist oder ähnliches.

In einer weiteren Weiterbildung der Erfindung umfasst der Vergleich des ersten Messwertes und des zweiten Messwertes ein Bilden einer Differenz des ersten Messwertes und des zweiten Messwertes.

In einer weiteren Ausprägung kann diese Differenz bzw. die daraus abgeleiteten, versteckten Fehler, erneut miteinander in Beziehung und in ihrer zueinanderstehenden Relation bewertet werden. Wenn insbesondere festgestellt wird, dass die während des Kalandrierens stärker werdenden Risse besonders intensiv ausgeprägt sind, wenn die Rolle, von der das zu kalandrierende Material abgewickelt wird, fast leer ist - das führt dazu, dass der Wickelradius und damit der vorher eingebrachte mechanische Stress also besonders ungünstig sind - dann wird ein Fehler in zweiter Rekursionstiefe entdeckt, insbesondere eine zu enge Aufwicklung auf dem Coil.

Über die Differenzanalyse und den mindestens einen Wert können also Fehler oder sogar Fehlerursachen ermittelt werden, die bei singulärer Sensoranalyse des ersten Messwertes und des zweiten Messwertes unentdeckt blieben.

Die Zuordnung der Sensorwerte, also des ersten und des zweiten Messwertes, vor und nach dem zu bewertenden Prozessschritt ist dabei trivial. Es existieren diverse Verfahren, die einen Sensorwert einer Position des Rohlings zuordnen und somit auch problemlos dem nächsten, zeitverzögert aufgenommenen Sensorwert der gleichen Position zuordnen können.

In einer weiteren Weiterbildung der Erfindung umfasst der Prozessschritt ein Bearbeiten oder ein Herstellen der Beschichtung. Die Beschichtung wird von der Schicht aufgewiesen.

Im Folgenden wird die Erfindung an konkreten Ausführungsbeispielen veranschaulicht.

In einem Kalandrierprozess wird eine beschichtete Metallfolie, das heißt der Rohling, aus dem später die Zelle gewickelt wird, mehrfach gebogen und zwischen massiven Walzen gepresst. Dieser Vorgang übt einen großen mechanischen Stress auf Material und Metallfolie aus. Wenn nun vorher und nachher jeweils mit identischen Mitteln, insbesondere einem Wirbelstromsensor, relevante Parameter, insbesondere die Haftung der Beschichtung, die Rissmenge oder die Oberflächenrauigkeit, ermittelt werden, können diese vor und nach dem Prozess vergleichen werden. Dabei kann erkannt werden, dass die Fehler, die gemessenen relevante Parameter, abnehmen oder zunehmen. Beide Informationen geben Hinweise auf versteckte Material- und Prozesseigenschaften und können zum Bestimmen des mindestens einen Wertes herangezogen werden.

In einem weiteren Beispiel könnte bei abnehmender Rissdichte, welche über den ersten und zweiten Messwert bestimmt wird, möglicherweise das Beschichtungsmaterial zu weich, also unzureichend getrocknet, sein. Das positive Ereignis der verschwindenden Risse steht dann der negativen Eigenschaft eines ungetrockneten und daher nicht weiter verarbeitbaren Rohlings gegenüber. Dieses Beispiel soll zeigen, dass der Messwert die Rissdichte ist, es kann aber auf den versteckten Parameter der Feuchtigkeit, der mindestens eine Wert, geschlossen werden. Dies ist nur durch den Vorher-Nachher-Vergleich möglich. Wäre nur nachher gemessen worden, wäre kein negativer Effekt erkennbar gewesen. Natürlich muss in diesem Fall auch nicht die unzureichende Trocknung Grund sein, die Erfindung könnte so ausgestaltet sein, dass Wahrscheinlichkeiten und Konfidenzintervalle für verschiedenen versteckte Messwerte angegeben werden.

In einem weiteren Beispiel wird in einer ersten Messung eine hohe Oberflächenrauigkeit (erster Messwert) festgestellt, beispielsweise durch eine Ansammlung eines Materialklumpens (Klebstoff zwischen den Schichten). In einem ersten Fall dieses Beispiels handelt es sich um eine größere Materialerhebung und eine Rauigkeit, an einer größeren Stelle. In einem zweiten Fall dieses Beispiels handelt es sich um mehrere kleine homogen verteilte Materialerhebungen und Rauigkeiten an mehreren homogen verteilten kleineren Stellen. In beiden Fällen führt der Prozessschritt des Walzens zu einer glatten Oberfläche geringer Rauigkeit. Im ersten Fall kann es aber durch die größere Ansammlung von unverdichtetem Material aus dem vorher noch existierenden Klumpen aus Rohmaterial zu ungewünschten Eigenschaften (bestimmt durch den mindestens einen Wert) in der Beschichtung kommen. Würde die Messung (zweiter Messwert) nur nach dem Walzen stattfinden oder würde kein Vergleich der Messwerte vorher und Nachher stattfinden, würden diese ungewünschten Eigenschaften (bestimmt durch den mindestens einen Wert) nicht erkannt werden.

In einem weiteren Beispiel könnte bei zunehmender Menge an Ablösungen des Materials von der Metallfolie (zweiter Messwert) abgeleitet werden, dass die mechanische Zugspannung (der mindestens eine Wert) auf den Walzen zu groß ist, so dass es zu lokalen Materialüberdehnungen kommt.

Die Erfindung umfasst außerdem ein Computerprogrammprodukt, umfassend ein Computerprogramm, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung umfasst außerdem ein computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines erfindungsgemäßen Verfahrens ausgeführt werden, wenn das Computerprogramm auf der Recheneinheit ausgeführt wird.

Die Erfindung bietet den generellen Vorteil, dass die Erkenntnisse bezüglich des mindestens einen Werts mit bereits existierenden Geräten und auf Basis etablierter Verfahren ermittelt werden, dabei aber im laufenden Prozess in Echtzeit Einblicke liefern können, die sonst nur an ausgeschleusten Mustern im Labor ermittelt werden könnten.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnung ersichtlich.

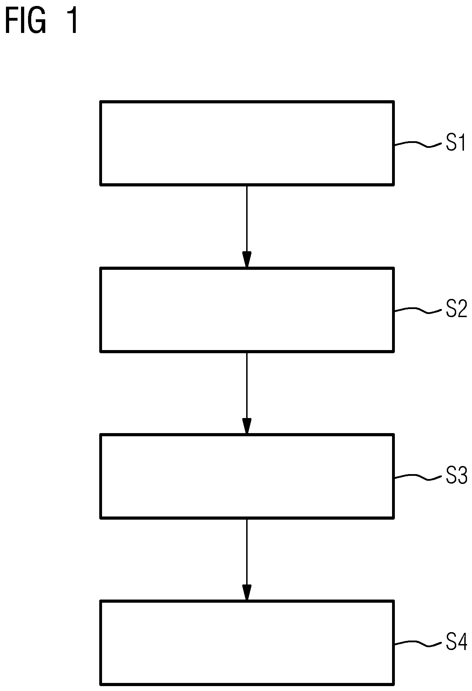

Es zeigt
- Fig. 1: ein Ablaufdiagramm des erfindungsgemäßen Verfahrens.

### DETAILLIERTE BESCHREIBUNG DER ERFINDUNG

Fig. 1 zeigt ein Ablaufdiagramm des erfindungsgemäßen Verfahrens zum Herstellen einer Batteriezelle aufweisend mindestens eine Schicht, wobei die Schicht eine Beschichtung aufweist.

Das Verfahren umfasst die Schritte:
- Schritt S1: Ermitteln eines ersten Messwertes durch ein Messverfahren vor Durchführen eines Prozessschritts des Herstellens der Batteriezelle, wobei der Prozessschritt ein Bearbeiten oder ein Herstellen der mindestens einen Schicht umfasst,
- Schritt S2: Ermitteln eines zweiten Messwertes durch das Messverfahren nach Durchführen des Prozessschritts,
- Schritt S3: Bestimmen von mindestens einem Wert unter Hinzunahme eines Vergleichs des ersten Messwertes und des zweiten Messwertes, wobei der mindestens eine Wert eine andere physikalische Größe bemisst, als der erste Messwert und als der zweite Messwert und
- Schritt S4: Herstellen der Batteriezelle unter Einbezug des mindestens einen Wertes.

Für konkrete Ausführungsbeispiel sei auf den vorherigen Teil der Beschreibung verwiesen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Verfahren zum Herstellen einer Batteriezelle aufweisend mindestens eine Schicht, wobei die Schicht eine Beschichtung aufweist,
mit den Schritten:
- Ermitteln (S1) eines ersten Messwertes durch ein Messverfahren vor Durchführen eines Prozessschritts des Herstellens der Batteriezelle, wobei der Prozessschritt ein Bearbeiten oder ein Herstellen der mindestens einen Schicht umfasst,
- Ermitteln (S2) eines zweiten Messwertes durch das Messverfahren nach Durchführen des Prozessschritts,
- Bestimmen (S3) von mindestens einem Wert unter Hinzunahme eines Vergleichs des ersten Messwertes und des zweiten Messwertes, wobei der mindestens eine Wert eine andere physikalische Größe bemisst, als der erste Messwert und als der zweite Messwert und
- Herstellen (S4) der Batteriezelle unter Einbezug des mindestens einen Wertes.

2. Verfahren nach Anspruch 1,
wobei die Batteriezelle als Lithium-Ionen-Zelle ausgebildet ist.

3. Verfahren nach einem der vorhergehenden Ansprüche,
wobei die mindestens eine Schicht als:
- Elektrode, insbesondere:
∘ Anode oder
∘ Kathode,
- Separator, und/oder
- Metallfolie, insbesondere:
∘ Kupferfolie oder
∘ Aluminiumfolie
ausgebildet ist.

4. Verfahren nach einem der vorhergehenden Ansprüche,
wobei die Beschichtung als Aktivmaterial ausgebildet ist, insbesondere aus einer lithiumhaltigen Paste.

5. Verfahren nach einem der vorhergehenden Ansprüche, wobei der erste Messwert und/oder der zweite Messwert als:
- Dicke der Beschichtung,
- Dicke der Schicht,
- Rissdichte in der Beschichtung,
- Rissgröße in der Beschichtung,
- Fremdpartikeldichte der Beschichtung,
- Fremdpartikelanteil der Beschichtung,
- Homogenität der Beschichtung,
- Oberflächenrauigkeit der Beschichtung,
- Porosität der Beschichtung,
- mechanische Festigkeit der Beschichtung,
- Härte der Beschichtung,
- Haftung der Beschichtung,
- Viskosität der Beschichtung,
- Vorlaufgeschwindigkeit bei einem Beschichtungsprozess,
- Folienvorlaufgeschwindigkeit bei einem Beschichtungsprozess,
- Wasseranteil der Beschichtung,
- Materialzusammensetzung der Beschichtung und/oder
- Materialverteilung der Beschichtung
ausgebildet ist.

6. Verfahren nach einem der vorhergehenden Ansprüche, wobei der mindestens eine Wert als:
- Lebensdauer,
- Kapazität,
- Qualitätsparameter und/oder
- Zellwiderstand
der Batteriezelle ausgebildet ist.

7. Verfahren nach einem der vorhergehenden Ansprüche, wobei der mindestens eine Wert als:
- Maschinenparameter,
- Herstellungsparameter und/oder
- Steuerparameter
des Herstellens der Batteriezelle ausgebildet ist.

8. Verfahren nach einem der vorhergehenden Ansprüche,
wobei das Herstellen (S4) der Batteriezelle unter Einbezug des mindestens einen Wertes:
- ein Anpassen von Herstellungsparametern,
- ein Bestimmen eines Qualitätsparameters,
- ein Bestimmen einer Stellgröße,
- ein Steuern von Maschinenparametern und/oder
- ein Speichern des mindestens einen Wertes
umfasst.

9. Verfahren nach einem der vorhergehenden Ansprüche,
wobei das Bestimmen (S3) des mindestens einen Wertes außerdem:
- eine Hinzunahme eines Modells,
- eine Analyse mittels mathematischer Methoden und/oder
- eine Simulation
umfasst.

10. Verfahren nach einem der vorhergehenden Ansprüche,
wobei der Prozessschritt ein Schritt:
- eines Biegeprozesses,
- eines Walzprozesses,
- eines Kalandrierprozesses und/oder
- eines Beschichtungsprozesses
ist.

11. Verfahren nach einem der vorhergehenden Ansprüche,
wobei das Messverfahren als:
- akustisches Messverfahren,
- strahlungsbasiertes Messverfahren,
- optisches Messverfahren und/oder
- elektromagnetisches Messverfahren
insbesondere als:
- Ultraschallverfahren,
- Röntgenverfahren oder
- Wirbelstromverfahren
ausgebildet ist.

12. Verfahren nach einem der vorhergehenden Ansprüche,
wobei der Vergleich des ersten Messwertes und des zweiten Messwertes ein Bilden einer Differenz des ersten Messwertes und des zweiten Messwertes umfasst.

13. Verfahren nach einem der vorhergehenden Ansprüche,
wobei der Prozessschritt ein Bearbeiten oder ein Herstellen der Beschichtung umfasst.

14. Computerprogrammprodukt, umfassend ein Computerprogramm, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.

15. Computerlesbares Medium, auf welchem ein Computerprogramm gespeichert ist, wobei das Computerprogramm in eine Speichereinrichtung einer Recheneinheit ladbar ist, wobei mit dem Computerprogramm die Schritte eines Verfahrens nach einem der Ansprüche 1 bis 13 ausgeführt werden, wenn das Computerprogramm auf der Recheneinheit ausgeführt wird.
